# EUROPÄISCHE PATENTSCHRIFT

(11) **EP 2 175 254 B1**
(45) Veröffentlichungstag und Bekanntmachung des Hinweises auf die Patenterteilung: **09.10.2019**
(21) Anmeldenummer: 09167797.1
(22) Anmeldetag: 13.08.2009
(51) Int. Cl.: G01M 13/028, G01H 1/00

(54) **Anordnung zur Schwingungsüberwachung eines rotierenden Bauteils**
Arrangement for vibration monitoring of a rotating component
Arrangement de surveillance des vibrations d'un composant rotatif

(30) Priorität: 13.10.2008 DE 102008042769
(43) Veröffentlichungstag der Anmeldung: 14.04.2010
(73) Patentinhaber: Robert Bosch GmbH, 70442 Stuttgart (DE)
(72) Erfinder: Dallinger, Frank, 70499, Stuttgart (DE)

(56) Entgegenhaltungen:
- DE-A1- 4 215 381
- US-A- 3 331 252
- US-A- 4 144 578

## Beschreibung

### Stand der Technik

Die vorliegende Erfindung betrifft eine Anordnung sowie ein Verfahren zur Schwingungsüberwachung rotierenden Bauteile, insbesondere schnelldrehender Wellen.

Bei der Überwachung schnelldrehender Wellen wird heutzutage oft nur die Drehzahl an der Antriebsseite und der Abtriebsseite gemessen. Durch Vergleich dieser beiden Drehzahlen kann jedoch lediglich der Bruch der Welle detektiert werden.

Zur genaueren Überwachung der Schwingung bzw. Unwucht schnelldrehender Wellen sind berührungslos arbeitende abstandserfassende Sensoren bekannt, welche jedoch meist nicht über eine hohe Signalbreite verfügen. Diejenigen Sensortypen, welche über eine ausreichend hohe Signalbreite verfügen, sind für einen Einsatzfall in schnelldrehenden Wellen wirtschaftlich uninteressant. So sind beispielsweise Triangulationssensoren mit schnellen CCD-Sensoren und Interferometern mit schnellen Auswerteschaltungen relativ kosten- und wartungsintensiv. Taktile, also berührende, Systeme scheiden für die meisten Anwendungsfälle aus.

Die US 4,144,578 A betrifft ein Verfahren zur Überwachung und Korrektur einer durch Bearbeitungsvorgänge beeinflussbaren physikalischen Kenngröße von in Serie bearbeiteten Werkstücken durch Bildung eines Mittelwertes aus diesen Kenngrößen mehrerer fertig bearbeiteter Werkstücke, insbesondere zur Überwachung und Korrektur des Auswuchtzustandes von Werkstücken.

Weiteren relevanten Stand der Technik zeigen US 3331252 A und DE 4215381 A1.

### Offenbarung der Erfindung

Die erfindungsgemäße Anordnung zur Schwingungsüberwachung mit den Merkmalen des Patentanspruchs 1 weist demgegenüber den Vorteil auf, dass für das benötigte Abstandsmessgerät einfache, handelsübliche Detektoren verwendet werden können. Diese Abstandsmessgeräte im Sinne der Erfindung sind wesentlich kostengünstiger als beispielsweise Triangulationssensoren und Interferometer. Etwaige Nachteile, wie beispielsweise ein thermisch bedingter Schaltpegeldrift, des einfachen Abstandsmessgerätes, werden durch die erfindungsgemäße Adaptionsvorrichtung ausgeglichen. Die Adaptationsvorrichtung setzt sich aus bekannten Bauteilen zusammen und ist somit einfach und kostengünstig herstellbar. Dies wird erfindungsgemäß dadurch erreicht, dass eine Anordnung zur Schwingungsüberwachung eines rotierenden Bauteils, umfassend ein Abstandsmessgerät, eine Adaptionsvorrichtung und eine Regel-/Steuereinheit vorgesehen wird. Dabei ist das Abstandsmessgerät ausgebildet, um einen Abstand zum rotierenden Bauteil, insbesondere zur Oberfläche einer schnellrotierenden Welle, zu messen und daraus ein Abstandssignal zu erzeugen. Die Adaptionsvorrichtung ist mit dem Abstandsmessgerät verbunden und ist dazu ausgebildet, einen Schaltpegeldrift des Abstandsmessgeräts auszugleichen. Dazu umfasst die Adaptionsvorrichtung einen Frequenzfilter, welcher ausgebildet ist, um aus dem Abstandssignal ein Mittelwertsignal zu erzeugen, und einen Verstärker, insbesondere Differenzverstärker, welcher ausgebildet ist, um aus dem Mittelwertsignal und dem Abstandssignal ein Adaptivsignal zu erzeugen. Die Regel-/Steuereinheit ist mit der Adaptionseinrichtung verbunden und dazu ausgebildet, eine Überwachungsfunktion auszuführen. Die erfindungsgemäße Adaptionsvorrichtung bildet also aus einem aktuellen Abstandssignal einen Mittelwert und kombiniert diesen mit dem Abstandssignal. Daraus wird dann das Adaptivsignal bzw. das adaptiv nachgeführte Messsignal, erzeugt. Somit ist es möglich, einen nachteiligen Schaltpegeldrift preisgünstiger Abstandsmessgeräte auszugleichen und Schwingungen auf schnelllaufenden Wellen mit einfachen Mitteln zu detektieren.

Die Unteransprüche zeigen bevorzugte Weiterbildungen der Erfindung.

In vorteilhafter Ausgestaltung umfasst die erfindungsgemäße Anordnung ferner einen ersten Komparator, welcher ausgebildet ist, um das Adaptivsignal mit einem Schwellwertsignal, welches eine Auslöseschwelle angibt, zu vergleichen und ein Abschaltsignal zu erzeugen, wenn das Adaptivsignal die Auslöseschwelle überschreitet. Der Komparator vergleicht also das Adaptivsignal mit einer Auslöseschwelle und kann ein Abschaltsignal an die Regelsteuereinheit senden. Somit kann die erfindungsgemäße Anordnung die Schwingung an einem rotierenden Bauteil nicht nur überwachen, sondern auch dessen Antrieb bei zu großer Unwucht abschalten. Vorzugsweise wird noch vor Erreichen einer kritischen Drehzahl eines rotierenden Bauteils, z.B. bei ca. 85 % der kritischen Drehzahl, eine Abschaltung ausgeführt um einen Wellenbruch zu verhindern. Als kritische Drehzahl wird dabei die Drehzahl des rotierenden Bauteils verstanden, bei welcher durch Unwucht auftretende Querkräfte zum Bauteilversagen führen. Somit wird in vorteilhafter Ausgestaltung der erste Komparator mit der Auslöseschwelle so ausgebildet, dass ein Abschalten bei 85 % der kritischen Drehzahl erfolgen kann. Alternativ kann die Auslöseschwelle auch vorteilhaft als Warngrenze verstanden werden. In diesem Fall wird die Drehzahl des rotierenden Bauteils reduziert anstatt die Rotation abzuschalten.

In weiterer vorteilhafter Ausgestaltung umfasst die erfindungsgemäße Anordnung einen zweiten Komparator, welcher ausgebildet ist, um Grenzen, insbesondere begrenzte Stromstärken, des Abstandsmessgerätes und/oder der Adaptionsvorrichtung zu überwachen. Um Fehlfunktionen der Schaltung bei der Adaption bzw. Nachführung des Abstandssignals zu verhindern, muss auf die Grenzen des Abstandsmessgerätes und der Adaptionsvorrichtung geachtet werden. Dies erfolgt mit einem zweiten Komparator, welcher ausgebildet ist, um insbesondere die Stromstärken im Abstandssignal und im Adaptivsignal zu überwachen.

Ferner vorteilhaft ist es, dass das Abstandsmessgerät ein induktiver Näherungsschalter ist, wobei das Abstandssignal ein direktes, analoges Messsignal des induktiven Näherungsschalters ist. Wie bereits diskutiert, können optisch arbeitende Messsysteme nach Stand der Technik in der Regel keine ausreichende Bandbreite messen. Dies kann jedoch hervorragend mit preiswerten induktiven Näherungsschaltern gelöst werden, bei welchen das Messsignal direkt ausgewertet wird. Wichtig ist hierbei, dass direkt das analoge Messsignal des induktiven Näherungsschalters ausgewertet wird, d.h., dass der induktive Sensor nicht als Schalter verwendet wird.

Weiterhin vorteilhaft ist es, bei Verwendung eines induktiven Näherungsschalters, dass das Abstandssignal dem Messsignal in einem Schaltbereich des induktiven Näherungsschalters entspricht, wobei der Schaltbereich ein annähernd linearer Bereich des Messsignals um einen Schaltpunkt des induktiven Näherungsschalters ist. Das Messsignal für induktive Näherungsschalter ist meist nur in der Nähe des Schaltpunktes verwendbar. Typische Schaltpunkte liegen z.B. im Bereich von 1-2 mm. Der Schaltbereich ist dabei auf eine Breite von wenigen 1/10 mm beschränkt. In der Nähe des Arbeitspunktes bzw. Schaltpunktes kann der Signalverlauf als quasi linear oder annähernd linear betrachtet werden. In diesem eingeschränkten Schaltbereich gibt das Signal des induktiven Näherungsschalters somit direkten Aufschluss über den Abstand vom rotierenden Bauteil zum Abstandsmessgerät.

In vorteilhafter Ausgestaltung ist der Frequenzfilter der Adaptionsvorrichtung entweder ein Tiefpassfilter oder ein Hochpassfilter. Für die Auskopplung des Adaptivsignals aus dem Abstandssignal ist sowohl ein Hochpassfilter als auch ein Tiefpassfilter denkbar und von Vorteil. Jedoch sei angemerkt, dass in den meisten Fällen der Tiefpassfilter die bessere Lösung darstellt, da hier die Adaption des Abstandssignals wesentlich stabiler verläuft.

Weiterhin vorteilhaft ist es, das Abstandsmessgerät so auszubilden, dass es entweder die Schwingung des rotierenden Bauteils in axialer oder in radialer Richtung messen kann. In den meisten Fällen ist die Schwingung bzw. Unwucht in radialer Richtung von Interesse. Jedoch kann die erfindungsgemäße Anordnung auch zur axialen Überwachung verwendet werden. Hierbei wird das Abstandsmessgerät an einer Fläche der Welle angeordnet, wobei diese Fläche senkrecht zu einer Rotationsachse der Welle ist. Ferner vorteilhaft ist es, falls Kupplungen als Toleranzausgleich eingesetzt werden, eine Absolutüberwachung der Radialposition vorzusehen. Bei schnelllaufenden Wellen verwendete Kupplungsarten erzeugen oft eine auslegungsproportionale Querkraft und begünstigen somit das Bruchverhalten der Welle. Diese Absolutüberwachung kann ebenfalls mit abstandsmessenden Sensoren bewältigt werden.

Die Erfindung umfasst ferner ein Verfahren zur Schwingungsüberwachung eines rotierenden Bauteils mit den Schritten: Messen eines Abstands zum Bauteil und Erzeugen eines Abstandssignals, insbesondere aus einem direkten, analogen Messsignal eines induktiven Näherungsschalters, und Ausgleichen eines Schaltpegeldrifts des Abstandssignals. Dabei umfasst das Ausgleichen des Schaltpegeldrifts die folgenden beiden Schritte: Erzeugen eines Mittelwertsignals aus dem Abstandssignal, und Erzeugen eines Adaptivsignals, insbesondere durch Differenzbildung, aus dem Mittelwertsignal und dem Abstandssignal.

Die Vorteile der erfindungsgemäßen Anordnung gelten sinngemäß für das erfindungsgemäße Verfahren. Die vorteilhaften Ausgestaltungen der erfindungsgemäßen Anordnung kommen auch in Verbindung mit dem erfindungsgemäßen Verfahren vorteilhaft zum Einsatz.

Ferner ist in vorteilhafter Ausgestaltung des erfindungsgemäßen Verfahrens vorgesehen, dass das Abstandssignal aus einem Abstandsmessgerät, insbesondere einem induktiven Näherungsschalter, erzeugt wird, wobei eine Minimalbandbreite des Abstandsmessgerätes mindestens dem vierfachen der Drehzahl des rotierenden Bauteils entspricht. In der Regel sollte die doppelte Bandbreite als Winkelauflösung bei Maximaldrehzahl noch sicher erfasst werden können. Als Minimalbandbreite für eine technische Nutzung sind λ/4 der Grundwelle (90° der Grundwelle) von Vorteil. Weiterhin vorteilhaft ist es, dieses Signal technisch doppelt abzutasten, d.h., die Minimalbandbreite entspricht 45° Winkelauflösung. Somit ergibt sich beispielsweise bei 20000 U/min. für 45° Winkelauflösung eine Bandbreite von ca. 2,7 kHz.

In weiterer vorteilhafter Ausgestaltung wird das erfindungsgemäße Verfahren zur Überwachung von Wellen mit einer Drehzahl größer oder gleich 20000 U/min und/oder von Wellen eines Elektromotors für Turbolader und/oder eines Luftverdichters und/oder eins Hybridmotors und/oder eines elektrohydraulischen Systems in Windkraftanlagen und/oder eines Verteilergetriebes eingesetzt.

### Zeichnung

Nachfolgend wird ein bevorzugtes Ausführungsbeispiel der Erfindung unter Bezugnahme auf die begleitende Zeichnung beschrieben. In der Zeichnung ist:
- Figur 1: ein Prüfstand für eine schnelldrehende Welle, bei welchem die erfindungsgemäße Anordnung nach dem Ausführungsbeispiel zur Anwendung kommt,
- Figur 2: eine geschnittene Darstellung der Welle aus Figur 1 mit der erfindungsgemäßen Anordnung nach dem Ausführungsbeispiel,
- Figur 3: eine Darstellung eines Abstandsverlaufs zwischen der Welle und einem Abstandsmessgerät,
- Figur 4: ein Schaltbild der erfindungsgemäßen Anordnung nach dem Ausführungsbeispiel,
- Figur 5-9: Darstellungen von Signalverläufen in der erfindungsgemäßen Anordnung nach dem Ausführungsbeispiel, und
- Figur 10: eine Darstellung eines Strom-Abstandsverlaufs in der erfindungsgemäßen Anordnung nach dem Ausführungsbeispiel.

### Beschreibung des Ausführungsbeispiels

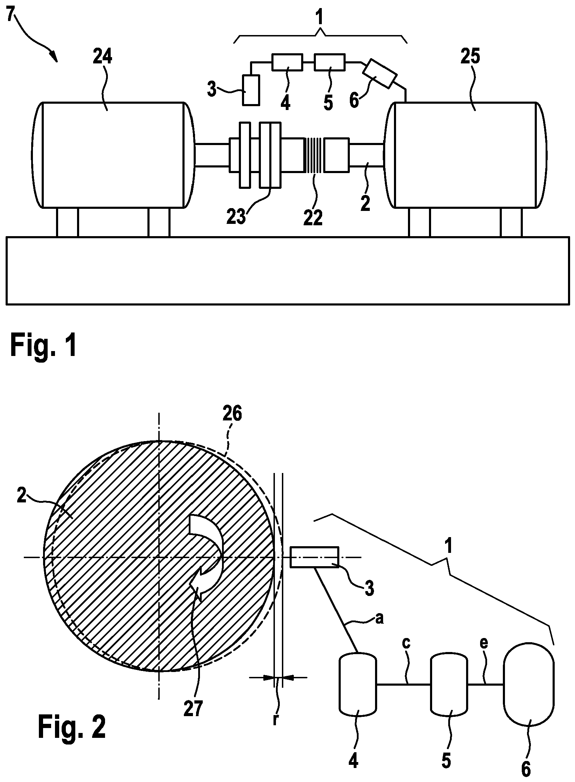

Nachfolgend wird unter Bezugnahme auf Figur 1 ein Prüfstand 7 mit einer Anordnung 1 gemäß einem Ausführungsbeispiel der vorliegenden Erfindung beschrieben. Dabei ist ein erster Elektromotor 24 über eine Welle 2 (rotierendes Bauteil) mit einem zweiten Elektromotor 25 verbunden. Die Welle 2 umfasst dabei ein Torsionselement 23 zur Drehmomentmessung sowie eine Lamellenkupplung 22 zum Toleranzausgleich. Zur Schwingungsüberwachung der Welle 2 ist die Anordnung 1 an dem Prüfstand 7 angeordnet.

Die Anordnung 1 umfasst ein Abstandsmessgerät 3, ausgebildet als induktiver Näherungsschalter, eine Adaptionsvorrichtung 4, eine erste Komparatoreinheit 5 und eine Regel-/Steuereinheit 6. Die Anordnung 1 erfasst mit dem Abstandsmessgerät 3 eine Schwingung der Welle 2 und regelt bzw. steuert über die Regel-/Steuereinheit 6 den Elektromotor 25.

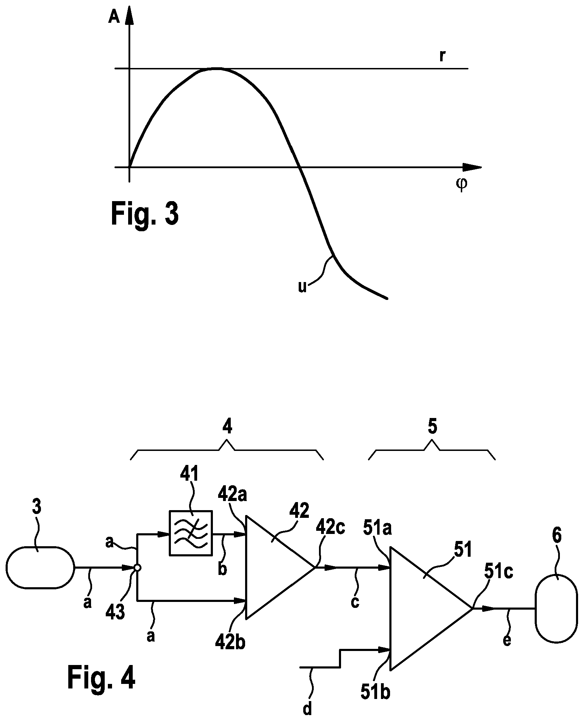

Im Folgenden wird nun anhand Figur 2 eine Platzierung des Abstandsmessgerätes 3 an der Welle 2 aufgezeigt. Eine genauere Beschreibung der Anordnung 1 folgt unter Bezugnahme auf Figur 4.

Figur 2 zeigt die Welle 2 in geschnittener Darstellung sowie die Anordnung 1. Die Welle 2 weist einen Drehsinn 27 im Uhrzeigersinn sowie eine Unwucht 26 (Schwingung) auf. Die Unwucht 26 alterniert mit einem Abstand zum Abstandsmessgerät 3, dargestellt als Ausschlag r. Das Abstandsmessgerät 3 der Anordnung 1 ist horizontal zu einem Umfang der Welle 2 und möglichst nahe an der Welle 2 angeordnet.

Figur 3 stellt einen Unwuchtverlauf u dar. Dabei ist auf der horizontalen Achse ein Drehwinkel ϕ der Welle 2 aufgezeichnet. Die Orthogonale bezeichnet eine Amplitude A der Unwucht 26 mit dem maximalen Ausschlag r. Dieser Unwuchtverlauf u wird von dem Abstandsmessgerät 3 erfasst und in der Anordnung 1 weiterverarbeitet.

Figur 4 zeigt die erfindungsgemäße Anordnung 1 nach dem Ausführungsbeispiel mit dem Abstandsmessgerät 3, der Adaptionsvorrichtung 4, der ersten Komparatoreinheit 5 sowie der Regel-/Steuereinheit 6.

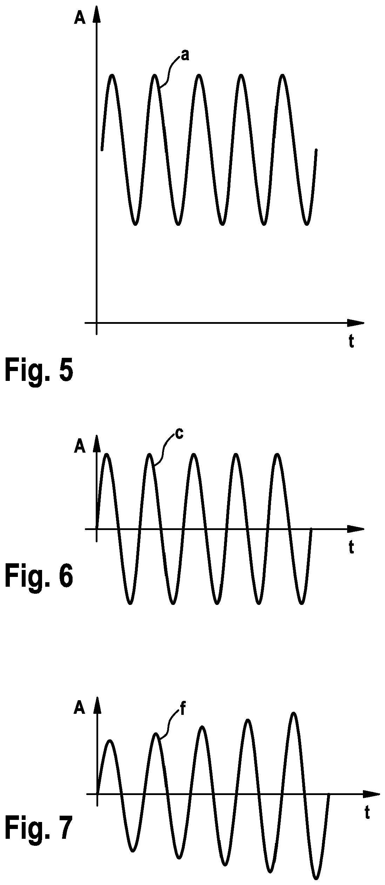

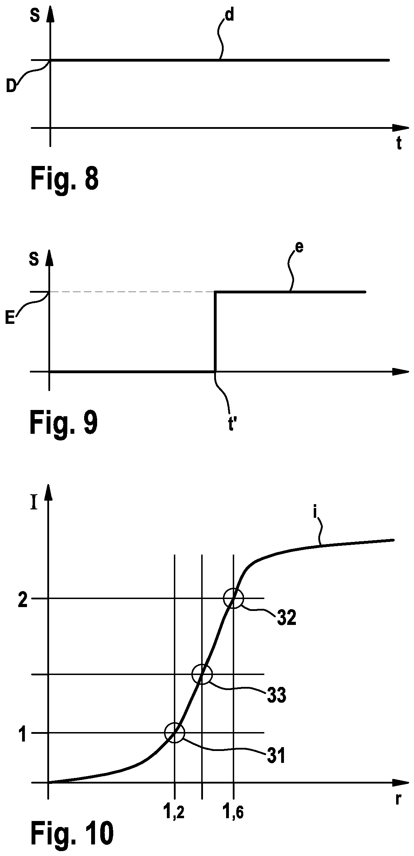

Das Abstandsmessgerät 3 erzeugt ein Abstandssignal a (Figur 5) und gibt dieses Abstandssignal a weiter an die Adaptionsvorrichtung 4. Die Adaptionsvorrichtung 4 wiederum erzeugt ein Adaptivsignal c (Figur 6) und gibt dieses Adaptivsignal c weiter an die erste Komparatoreinheit 5. Die erste Komparatoreinheit 5 erzeugt ein Steuersignal e (Figur 9) und gibt dieses Steuersignal e weiter an die Regel-/Steuereinheit 6.

Die Adaptionsvorrichtung 4 umfasst einen Frequenzfilter 41, ausgebildet als Tiefpassfilter, und einen Verstärker 42, ausgebildet als Differenzverstärker, mit einem ersten Eingang 42a, einem zweiten Eingang 42b sowie einem Ausgang 42c. Dem ersten Eingang 42a des Verstärkers 42 ist der Frequenzfilter 41 vorgelagert. Am Eingang der Adaptionsvorrichtung 4 befindet sich eine Verzweigung 43. Von dieser Verzweigung 43 geht das Abstandssignal a sowohl in den Frequenzfilter 41 als auch direkt in den zweiten Eingang 42b des Verstärkers 42. Der Frequenzfilter 41 erzeugt ein Mittelwertsignal b aus dem Abstandssignal a und gibt das Mittelwertsignal b an den ersten Eingang 42a des Verstärkers 42 weiter. Der Verstärker 42 erzeugt das Adaptivsignal c, welches zur Komparatoreinheit 5 weitergeleitet wird.

Die erste Komparatoreinheit 5 besteht aus einem ersten Komparator 51 mit einem ersten Komparatoreingang 51a, einem zweiten Komparatoreingang 51b und einem Komparatorausgang 51c. Der erste Komparatoreingang 51a ist direkt mit dem Ausgang 42c des Verstärkers 42 verbunden und empfängt somit das Adaptivsignal c. Der zweite Komparatoreingang 51b empfängt ein Schwellwertsignal d (Figur 8). Im ersten Komparator 51 wird das Steuersignal e erzeugt und über den Komparatorausgang 51c an die Regel-/Steuereinheit 6 weitergeleitet.

Mit dem soeben beschriebenen Aufbau der Anordnung 1 ist eine kompakte und kostengünstige Überwachungsvorrichtung für schnellaufende Wellen aufgezeigt. Der verwendete induktive Näherungsschalter ist handelsüblich und kostengünstig. Er weist zwar einen thermisch bedingten Schaltpegeldrift auf, dieser kann jedoch mit der erfindungsgemäßen Adaptionsvorrichtung 4 auf einfache und effektive Weise ausgeglichen werden. Die erste Komparatoreinheit 5 bildet zusammen mit der Regel-/Steuereinheit 6 eine universelle Schnittstelle zu einem Antrieb der Welle 2.

Figur 5 zeigt das Abstandssignal a, welches das Abstandsmessgerät 3 aus der detektierten Unwucht 26 der Welle 2 erzeugt. Dabei ist eine sinusförmige Schwingung des Abstandssignals a über der Zeit t mit einer Amplitude A auf der Orthogonalen zu sehen. Dieses Abstandssignal a muss aufgrund von temperaturbedingten Schaltpegeldrift des Abstandsmessgerätes 3 in der Adaptionsvorrichtung 4 nachgeführt werden.

Figur 6 zeigt das Adaptivsignal c als sinusförmige Schwingung über der Zeit t mit der Amplitude A auf der Orthogonalen. Dieses Adaptivsignal c entsteht im Verstärker 42 durch Differenzbildung aus dem Mittelwertsignal b des Frequenzfilters 41 und dem Abstandssignal a. Hierzu ist anzumerken, dass die Welle 2 bei Unwucht 26 um einen Achsmittelpunkt taumelt, d.h., dass ein Mittelwert aus dem Abstandssignal a ein Nullsignal einer nominellen Wellenachse darstellt. Somit kann mittels einer gleitenden Mittelwertbildung im Frequenzfilter 41 das Abstandssignal a zur Bildung des Mittelwertsignals b verwendet werden. Dabei ist zu beachten, dass der Frequenzfilter 41 derart auszulegen ist, dass die zu erwartende Temperaturänderung ausgeglichen wird. In der Regel sind Zeitkonstanten von mehreren Sekunden bis eine Minute eine brauchbare Größe. Somit erzeugt die Adaptivvorrichtung 4 durch Linearisierung ein Adaptivsignal c, welches vom Schaltpegeldrift bereinigt ist.

Figur 7 zeigt ein ansteigendes Adaptivsignal f als Sinusschwingung über der Zeit t mit der Amplitude A. In Figur 7 ist somit eine Variante des Adaptivsignals c bei einer Erhöhung der Unwucht 26 über der Zeit t dargestellt. Dadurch entsteht das ansteigende Adaptivsignal f. Das Ansteigen ist auf eine Beschleunigung der Welle 2 zurückzuführen. Dieses ansteigende Adaptivsignal f der Figur 7 ist Grundlage für die folgende Beschreibung eines Abschaltvorgangs mittels der ersten Komparatoreinheit 5 und der Regel-/Steuereinheit 6.

Figur 8 zeigt ein konstantes Schwellwertsignal d mit der Auslöseschwelle D. Dabei bezeichnet die horizontale Achse die Zeit t und die Orthogonale die Signalhöhe S. Dieses Schwellwertsignal d wird in den zweiten Komparatoreingang 51d eingespeist und dient dort zur Definition einer Auslöseschwelle für eine Abschaltung der Welle 2.

Figur 9 zeigt das Steuersignal e über der Zeit t mit einer Signalhöhe S auf der Orthogonalen. Auf der Orthogonalen ist dabei eine Steuersignalhöhe E eingezeichnet. Der erste Komparator 41 überprüft, ob eine Amplitude A des ansteigenden Adaptivsignals f (Figur 7) das Schwellwertsignal d (Figur 8) überschreitet. In Figur 9 ist ein Überschreiten des Schwellwertsignals d zum Zeitpunkt t' dargestellt. Zu diesem Zeitpunkt t' springt das Steuersignal e sprungartig auf die Steuersignalhöhe E. Das Steuersignal e mit der Steuersignalhöhe E wird dann über den Komparatorausgang 41c an die Regel-/Steuereinheit 6 weitergeleitet.

An der Regel-/Steuereinheit 6 kann das Steuersignal e zum Abschalten des ersten Elektromotors 24 und des zweiten Elektromotors 25 verwendet werden. Alternativ ist natürlich auch eine Reduzierung von Drehzahl oder Drehmoment des ersten Elektromotors 24 und/oder des zweiten Elektromotors 25 denkbar.

Figur 10 zeigt ein Diagramm mit dem Ausschlag r der Welle 2 auf einer horizontalen Achse und einer Stromstärke I des Abstandssignals a auf einer Orthogonalen. Darin ist ein Strom-Abstandsverlauf i eingezeichnet. Dieser Stromabstandsverlauf i weist eine untere Schaltgrenze 31, eine obere Schaltgrenze 32 und einen Schaltpunkt 33 auf. Die untere Schaltgrenze 31 und die obere Schaltgrenze 32 zeigen somit die Grenzen eines nutzbaren Bereiches des Abstandsmessgeräts 3 auf. Zwischen der unteren Schaltgrenze 31 und der oberen Schaltgrenze 32 verläuft der Strom-Abstandsverlauf i annähernd linear bzw. quasi linear. Wie zu sehen ist, ist dieser annähernd lineare Bereich 0,4 mm breit und erstreckt sich über 1 mA. Zur Überwachung dieser Grenzen ist es vorteilhaft, eine zweite Komparatoreinheit mit einem zweiten Komparator (nicht dargestellt) vorzusehen.

## Patentansprüche

1. Anordnung zur Schwingungsüberwachung eines rotierenden Bauteils (2) umfassend
- ein Abstandsmessgerät (3), welches ausgebildet ist, um einen Abstand (r) zum Bauteil (2) zu messen und daraus ein Abstandssignal (a) zu erzeugen,
- eine Adaptionsvorrichtung (4) verbunden mit dem Abstandsmessgerät (3), um einen Schaltpegeldrift des Abstandsmessgerätes (3) auszugleichen, umfassend
- einen Frequenzfilter (41), welcher ausgebildet ist, um aus dem Abstandssignal (a) ein Mittelwertsignal (b) zu erzeugen, und
- einen Verstärker (42), insbesondere Differenzverstärker, welcher ausgebildet ist, um aus dem Mittelwertsignal (b) und dem Abstandssignal (a) ein Adaptivsignal (c) zu erzeugen, und
- eine Regel-/Steuereinheit (6) verbunden mit der Adaptionsvorrichtung (4), welche ausgebildet ist, um eine Überwachungsfunktion auszuführen.

2. Anordnung nach Anspruch 1, ferner umfassend einen ersten Komparator (51), welcher ausgebildet, um das Adaptivsignal (c) mit einem Schwellwertsignal (d), welches eine Auslöseschwelle (D) angibt, zu vergleichen und ein Steuersignal (e) zu erzeugen wenn das Adaptivsignal (c) die Auslöseschwelle (D) überschreitet.

3. Anordnung nach einem der vorhergehenden Ansprüche, ferner umfassend einen zweiten Komparator, welcher ausgebildet ist, um Grenzen, insbesondere begrenzte Stromstärken, des Abstandsmessgerätes (3) und/oder der Adaptionsvorrichtung (4) zu überwachen.

4. Anordnung nach einem der vorhergehenden Ansprüche, **dadurch gekennzeichnet, dass** das Abstandsmessgerät (3) ein induktiver Näherungsschalter ist, wobei das Abstandssignal (a) ein direktes, analoges Messsignal des induktiven Näherungsschalters ist.

5. Anordnung nach Anspruch 4, **dadurch gekennzeichnet, dass** das Abstandssignal (a) dem Messsignal in einem Schaltbereich des induktiven Näherungsschalters entspricht, wobei der Schaltbereich ein annähernd linearer Bereich des Messsignals um einen Schaltpunkt (33) des induktiven Näherungsschalters ist.

6. Anordnung nach einem der vorhergehenden Ansprüche, **dadurch gekennzeichnet, dass** der Frequenzfilter (41) einen Tiefpassfilter oder einen Hochpassfilter umfasst.

7. Verfahren zur Schwingungsüberwachung eines rotierenden Bauteils umfassend die Schritte:
- Messen eines Abstands (r) zum Bauteil (2) und Erzeugen eines Abstandssignals (a), und
- Ausgleichen eines Schaltpegeldrifts des Abstandssignals (a) durch
- Erzeugen eines Mittelwertsignals (b) aus dem Abstandssignal (a), und
- Erzeugen eines Adaptivsignals (c), insbesondere durch Differenzbildung, aus dem Mittelwertsignal (b) und dem Abstandssignal (a).

8. Verfahren nach Anspruch 7, ferner umfassend die Schritte:
- Vergleichen des Adaptivsignals (c) mit einem Schwellwertsignal (d), welches eine Auslöseschwelle (D) angibt, und Erzeugen eines Steuersignals (e) wenn das Adaptivsignal (c) die Auslöseschwelle (D) überschreitet, und
- Weiterleiten des Steuersignals (e) zu einer eine Regel-/Steuereinheit (6), um eine Überwachungsfunktion auszuführen.

9. Verfahren nach einem der Ansprüche 7 oder 8, **dadurch gekennzeichnet, dass** zumindest eine Grenze, insbesondere eine begrenzte Stromstärke, des Abstandssignals (a) und/oder des Adaptivsignals (c) überwacht wird.

10. Verfahren nach einem der Ansprüche 7 bis 9, **dadurch gekennzeichnet, dass** das Abstandssignal (a) aus einem Abstandsmessgerät (3), insbesondere einem induktiven Näherungsschalter, erzeugt wird, wobei eine Minimalbandbreite des Abstandsmessgeräts (3) mindestens dem vierfachen einer Drehzahl des Bauteils (2) entspricht.

11. Verfahren nach einem der Ansprüche 7 bis 10, **dadurch gekennzeichnet, dass** der Abstand (r) zum Bauteil (2) in radialer Richtung zum Bauteil gemessen wird und/oder dass der Abstand (r) zum Bauteil (2) in axialer Richtung zum Bauteil (2) gemessen wird.

12. Verfahren nach einem der Ansprüche 7 bis 11, **dadurch gekennzeichnet, dass** das Verfahren zur Überwachung von Wellen mit einer Drehzahl größer 20000 U/min und/oder von Wellen eines Elektromotors für Turbolader und/oder eines Luftverdichters und/oder eines Hybridmotors und/oder eines elektrohydraulischen Systems in Windkraftanlagen und/oder eines Verteilergetriebes eingesetzt wird.

## Claims

1. Arrangement for monitoring the vibration of a rotating component (2) comprising
- a distance measurement apparatus (3) that is designed to measure a distance (r) to the component (2) and to generate a distance signal (a) therefrom,
- an adaptation device (4) connected to the distance measurement apparatus (3) in order to compensate a switching level drift of the distance measurement apparatus (3), comprising
- a frequency filter (41) that is designed to generate an average value signal (b) from the distance signal (a), and
- an amplifier (42), in particular differential amplifier, that is designed to generate an adaptive signal (c) from the average value signal (b) and the distance signal (a),
- a regulation/control unit (6) connected to the adaptation device (4), which is designed to execute a monitoring function.

2. Arrangement according to Claim 1, furthermore comprising a first comparator (51), which is designed to compare the adaptive signal (c) with a threshold value signal (d) that indicates a trigger threshold (D) and to generate a control signal (e) when the adaptive signal (c) exceeds the trigger threshold (D).

3. Arrangement according to either of the preceding claims, furthermore comprising a second comparator that is designed to monitor limits, in particular limited current strengths, of the distance measurement apparatus (3) and/or of the adaptation device (4).

4. Arrangement according to one of the preceding claims, **characterized in that** the distance measurement apparatus (3) is an inductive proximity switch, wherein the distance signal (a) is a direct analogue measured signal from the inductive proximity switch.

5. Arrangement according to Claim 4, **characterized in that** the distance signal (a) corresponds to the measured signal in a switching region of the inductive proximity switch, wherein the switching region is an approximately linear region of the measured signal around a switching point (33) of the inductive proximity switch.

6. Arrangement according to one of the preceding claims, **characterized in that** the frequency filter (41) comprises a low-pass filter or a high-pass filter.

7. Method for monitoring the vibration of a rotating component, comprising the steps:
- measuring a distance (r) to the component (2) and generating a distance signal (a), and
- compensating a switching level drift of the distance signal (a) by
- generating an average value signal (b) from the distance signal (a), and
- generating an adaptive signal (c), in particular by subtraction, from the average value signal (b) and the distance signal (a).

8. Method according to Claim 7, furthermore comprising the steps:
- comparing the adaptive signal (c) with a threshold value signal (d) that indicates a trigger threshold (D) and generating a control signal (e) when the adaptive signal (c) exceeds the trigger threshold (D), and
- forwarding the control signal (e) to a regulation/control unit (6) in order to execute a monitoring function.

9. Method according to either of Claims 7 and 8, **characterized in that** at least one limit, in particular a limited current strength, of the distance signal (a) and/or of the adaptive signal (c) is monitored.

10. Method according to one of Claims 7 to 9, **characterized in that** the distance signal (a) is generated from a distance measurement apparatus (3), in particular an inductive proximity switch, wherein a minimum range of the distance measurement apparatus (3) corresponds to at least four times a rotational speed of the component (2).

11. Method according to one of Claims 7 to 10, **characterized in that** the distance (r) to the component (2) is measured in the radial direction to the component and/or **in that** the distance (r) to the component (2) is measured in the axial direction to the component (2).

12. Method according to one of Claims 7 to 11, **characterized in that** the method is used to monitor shafts having a rotational speed greater than 20 000 rpm and/or shafts of an electric motor for turbochargers and/or of an air compressor and/or of a hybrid engine and/or of an electrohydraulic system in wind turbines and/or of a transfer case.

## Revendications

1. Arrangement de surveillance des vibrations d'un composant rotatif (2), comprenant
- un appareil de mesure de distance (3), qui est conçu pour mesurer une distance (r) du composant (2) et produire à partir de celle-ci un signal de distance (a),
- un dispositif d'adaptation (4) relié à l'appareil de mesure de distance (3), afin de compenser une dérive du niveau de commutation de l'appareil de mesure de distance (3),
comprenant
- un filtre de fréquences (41), qui est conçu pour produire un signal de valeur moyenne (b) à partir du signal de distance (a), et
- un amplificateur (42), en particulier un amplificateur différentiel, qui est conçu pour produire un signal d'adaptation (c) à partir du signal de valeur moyenne (b) et du signal de distance (a), et
- une unité de régulation/commande (6), reliée au dispositif d'adaptation (4), qui est conçue pour exécuter une fonction de surveillance.

2. Arrangement selon la revendication 1, comprenant en outre un premier comparateur (51), qui est conçu pour comparer le signal d'adaptation (c) à un signal de valeur de seuil (d), qui indique un seuil de déclenchement (D), et produire un signal de commande (e) lorsque le signal d'adaptation (c) dépasse le seuil de déclenchement (D).

3. Arrangement selon l'une quelconque des revendications précédentes, comprenant en outre un deuxième comparateur, qui est conçu pour surveiller des limites, en particulier des intensités de courant limitées, de l'appareil de mesure de distance (3) et/ou du dispositif d'adaptation (4).

4. Arrangement selon l'une quelconque des revendications précédentes, **caractérisé en ce que** l'appareil de mesure de distance (3) est un interrupteur de proximité à induction, dans lequel le signal de distance (a) est un signal de mesure analogique direct de l'interrupteur de proximité à induction.

5. Arrangement selon la revendication 4, **caractérisé en ce que** le signal de distance (a) correspond au signal de mesure dans une plage de commutation de l'interrupteur de proximité à induction, dans lequel la plage de commutation est une plage approximativement linéaire du signal de mesure autour d'un point de commutation (33) de l'interrupteur de proximité à induction.

6. Arrangement selon l'une quelconque des revendications précédentes, **caractérisé en ce que** le filtre de fréquences (41) est un filtre passe-bas ou un filtre passe-haut.

7. Procédé de surveillance des vibrations d'un composant rotatif, comprenant les étapes suivantes:
- mesurer une distance (r) du composant (2) et produire un signal de distance (a), et
- compenser une dérive de niveau de commutation du signal de distance (a) en
- produisant un signal de valeur moyenne (b) à partir du signal de distance (a), et
- produisant un signal d'adaptation (c), en particulier par la formation de la différence, à partir du signal de valeur moyenne (b) et du signal de distance (a).

8. Procédé selon la revendication 7, comprenant en outre les étapes suivantes:
- comparer le signal d'adaptation (c) à un signal de valeur de seuil (d), qui indique un seuil de déclenchement (D), et produire un signal de commande (e) lorsque le signal d'adaptation (c) dépasse le seuil de déclenchement (D), et
- retransmettre le signal de commande (e) à une unité de régulation/commande (6), afin d'exécuter une fonction de surveillance.

9. Procédé selon une des revendications 7 ou 8, **caractérisé en ce que** l'on surveille au moins une limite, en particulier une intensité de courant limitée, du signal de distance (a) et/ou du signal d'adaptation (c).

10. Procédé selon l'une quelconque des revendications 7 à 9, **caractérisé en ce que** l'on produit le signal de distance (a) à partir d'un appareil de mesure de distance (3), en particulier d'un interrupteur de proximité à induction, dans lequel une largeur de bande minimale de l'appareil de mesure de distance (3) correspond au moins au quadruple d'un nombre de tours du composant (2).

11. Procédé selon l'une quelconque des revendications 7 à 10, **caractérisé en ce que** l'on mesure la distance (r) du composant (2) en direction radiale par rapport au composant et/ou **en ce que** l'on mesure la distance (r) du composant (2) en direction axiale par rapport au composant (2).

12. Procédé selon l'une quelconque des revendications 7 à 11, **caractérisé en ce que** l'on utilise le procédé pour la surveillance d'arbres avec un nombre de tours de plus de 20000 tr/min et/ou d'arbres d'un moteur électrique pour un turbocompresseur et/ou d'un compresseur d'air et/ou d'un moteur hybride et/ou d'un système électrohydraulique dans des éoliennes et/ou d'un engrenage de distributeur.
